# EUROPEAN PATENT SPECIFICATION

(11) **EP 4 081 427 B1**
(45) Date of publication and mention of the grant of the patent: **23.07.2025**
(21) Application number: 20838612.8
(22) Date of filing: 15.12.2020
(51) Int. Cl.: B60T 7/04, B60T 7/06, B60T 8/1755, B60T 8/40, B60T 8/42, B60T 11/10

(54) **BRAKING SYSTEM FOR VEHICLES WITH COLLAPSIBLE ACTUATION PEDAL AND METHOD OF ACTUATION OF A BRAKING SYSTEM IN THE EVENT OF AN IMPACT**
BREMSSYSTEM FÜR FAHRZEUGE MIT ZUSAMMENKLAPPBAREM BETÄTIGUNGSPEDAL UND VERFAHREN ZUR BETÄTIGUNG EINES BREMSSYSTEMS BEI EINEM AUFPRALL
SYSTÈME DE FREINAGE POUR VÉHICULES À PÉDALE D'ACTIONNEMENT REPLIABLE ET PROCÉDÉ D'ACTIONNEMENT D'UN SYSTÈME DE FREINAGE EN CAS DE CHOC

(30) Priority: 23.12.2019 IT 201900025336
(43) Date of publication of application: 02.11.2022
(73) Proprietor: Brembo S.p.A., 24035 Curno (Bergamo) (IT)
(72) Inventor: TRUFFELLO, Martina, 24035 Curno, Bergamo (IT); DOZZI, Francesco, 24035 Curno, Bergamo (IT)
(74) Representative: Mitola, Marco
(86) International application number: PCT/IB2020/061931
(87) International publication number: WO 2021/130604

(56) References cited:
- WO-A1-95/25027
- GB-A- 2 322 836
- GB-A- 2 345 107
- KR-A- 20190 130 026
- US-B2- 9 586 487

## Description

### FIELD OF APPLICATION

The present invention relates to a braking system for vehicles with collapsible actuation pedal and method of actuation of a braking system in the event of an impact.

### PRIOR ART

This invention applies to the technical field of automotive braking systems comprising the use of a brake pedal connected to a respective lever.

The brake pedal lever, under normal operating conditions, is held in an idle position. When it is in this position, the braking system does not apply any braking action.

In the event of an accident, however, the pedal lever is a potential hazard for the driver, who, in the event of an impact with it, risks suffering from physical damage (e.g. typically fractures to the leg and/or foot bones) .

To solve this problem, pedal solutions exist in the prior art which comprise mechanically collapsible parts; such solutions are difficult to implement because said components could be subject to collapse also due to stresses caused by external forces, present in normal conditions of use, e.g. such as road surface irregularities. Such solutions cannot discriminate between stresses due to accidental impacts and those caused by normal conditions of use (uneven asphalt, potholes, off-road driving) => unintended collapse.

Furthermore, they do not always guarantee an immediate collapse of the lever and thus do not always avoid the risk of physical damage to the driver because it is necessary to exceed a threshold value of the impact force between the limb and the pedal itself for it to collapse. Obviously, for safety reasons, such a threshold value cannot be low, otherwise there would be a risk of dangerous "false activations" in the event of, for example, uneven ground, holes, stones and the like. Solutions according to cited prior art are disclosed by WO 95/25027 A1, GB 2345107 A and US 9586487 B2.

### PRESENTATION OF THE INVENTION

Therefore, the need is felt to solve the drawbacks and limitations mentioned above with reference to the prior art.

Such a need is met by a braking system for vehicles with collapsible actuation pedal according to claim 1 and by an actuation method of a braking system in case of impact according to claim 7.

In particular, such a requirement is met by a braking system for vehicles with a collapsible actuation pedal, comprising
- an operating pedal operatively connected to a hydraulic master cylinder having a delivery circuit fluidically connected to an accumulator device, characterized in that
- the delivery circuit comprises a hydraulic branch provided with at least one normally closed control valve,
- said control valve being connected to a control actuator which commands its opening when an impact or accident is detected by an appropriate detector or being calibrated to open automatically when a limit pressure and/or flow rate value is reached in the hydraulic branch following the lowering of the actuation pedal,
characterized in that
the hydraulic branch is arranged in series and downstream relative to the accumulator device.

According to a possible embodiment, said detector is, for example, an airbag controller, which supervises the operation of at least one airbag, and wherein the control actuator is operatively connected to said controller, to actuate the control valve to open when the airbag controller commands the activation of said airbag.

According to a possible embodiment, the airbag controller is connected to an explosive charge which acts as an actuator of the control valve, so that the explosive charge can directly activate the opening of the control valve.

According to a possible embodiment, the control valve is a pressure relief valve, and the control actuator comprises a second accumulator device, arranged in series and downstream of said accumulator device.

According to a possible embodiment, the braking system comprises at least one electro-hydraulic or electro-mechanical actuator connected to at least one braking device, which controls the actuation of the braking device as a function of the actuation pedal stroke.

According to a possible embodiment, the braking system comprises a safety valve which, in the event of an electrical fault of said electro-hydraulic or electro-mechanical actuator, fluidically connects the delivery circuit with at least one braking device.

The present invention also relates to an actuation method of a braking system in case of impact comprising the steps of:
- providing a braking system for vehicles with collapsible actuation pedal, comprising an actuation pedal operatively connected to a hydraulic pump having a delivery circuit fluidically connected to an accumulator device,
- depressurizing the delivery circuit in the event of detection of an impact of the vehicle on which said braking system is installed and/or in the event of exceeding a pressure and/or flow rate limit value in said delivery circuit,
- providing, in the delivery circuit, a hydraulic branch equipped with at least one normally closed control valve,
- said control valve being connected to a control actuator which commands its opening when an impact or accident is detected by an appropriate detector or being calibrated to open automatically when a limit pressure and/or flow rate value is reached in the hydraulic branch following the lowering of the actuation pedal,
characterized in that
the hydraulic branch is arranged in series and downstream relative to the accumulator device.

### DESCRIPTION OF THE DRAWINGS

Further features and advantages of the present invention will be more comprehensible from the following description of preferred embodiments given by way of nonlimiting examples, in which:
figure 1 is a diagrammatic view of a braking system for vehicles of the prior art;
figure 2 is a diagrammatic view of a braking system according to a first embodiment of an apparatus not being part of the present invention;
figure 3 is a diagrammatic view of a braking system according to a further embodiment not being part of the present invention;
figure 4 is a diagrammatic view of a braking system according to an embodiment of the present invention.

Elements or parts in common to the embodiments described will be indicated hereafter using the same reference numerals.

### DETAILED DESCRIPTION

With reference to the aforesaid figures, reference numeral 4 globally indicates a braking system, as described in greater detail below.

The braking system is preferably, but not necessarily, of the brake-by-wire type.

For the purposes of the present invention, the specific type of braking devices employed in the braking system (not shown), which usually, but not necessarily, comprise disc or drum brakes, is not relevant.

The braking system 4 comprises a collapsible actuation pedal 8 operatively connected to a hydraulic master cylinder 12 having a delivery circuit 16 fluidically connected to an accumulator device 20.

The accumulator device 20 is a device configured to simulate the pedal resistance provided by a conventional hydraulic brake system. The accumulator device 20 may also be a reservoir or pressure fluid accumulator.

Advantageously, the delivery circuit 16 comprises a hydraulic branch 24 provided with at least one normally closed control valve 28.

According to an embodiment, said control valve 28 is connected to a control actuator 32 which controls its opening upon detection of an impact or incident by an appropriate detector 36 (trigger). Preferably, said detector 36 is an airbag controller, which supervises the operation of at least one airbag, said control actuator 32 being, in turn, operatively connected to said airbag controller 36, to actuate said control valve 28 to open when said airbag controller commands the activation of said airbag.

In this manner, if the airbag controller 36 detects an impact of a given intensity, it commands the control actuator 32 to open the control valve 28, releasing the pressure, i.e. depressurizing the delivery circuit. In this manner, if the driver's foot were to impact against the actuation pedal 8, the pedal would not offer any resistance and it would collapse, i.e. it would fall without causing injury to the driver.

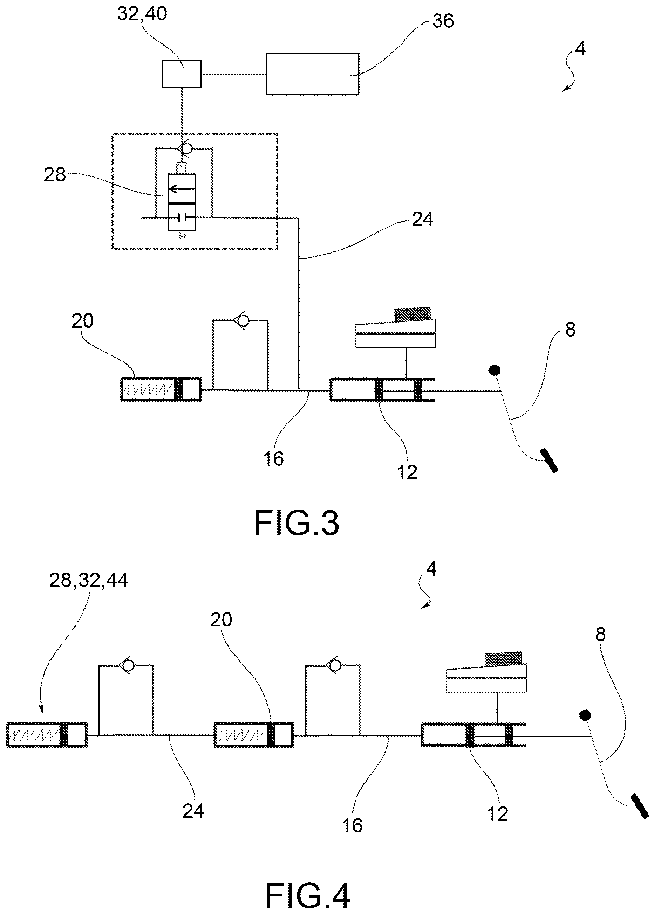

According to a further possible embodiment (figure 3), the airbag controller 36 is provided with an explosive charge 40 which acts as a control actuator 32 of the control valve 28, so that the explosive charge can directly activate the opening of the control valve 28. The depressurization of the pressure circuit 16 is particularly rapid in this embodiment.

According to a further embodiment (figure 4), said control valve 28 is calibrated to open automatically upon reaching a pressure and/or flow limit value in the hydraulic branch 24 following lowering of the actuation pedal 8.

In other words, if the user's foot or leg were to accidentally impact against the actuation pedal 8, causing the sudden lowering of the pedal and thus increasing the delivery pressure of the hydraulic master cylinder 12 in the delivery circuit 16, the control valve 28 would open automatically when said pressure and/or flow rate limit value is reached; in this case, the actuation pedal 8 would lower abruptly, ceasing to offer resistance and preventing damage to the user's foot or leg.

The hydraulic branch 24 is arranged in series and downstream with respect to the accumulator device 20. Furthermore, the control valve 28 is a pressure relief valve and the control actuator 32 comprises a second accumulator device 44, arranged in series and downstream of said accumulator device 20.

In this manner, the second accumulator device 44 acts as a pressure limiter of the pressure circuit 16; again in this case, if the user's foot or leg were to accidentally impact against the actuation pedal 8, causing the sudden lowering of the pedal and thus increasing the pressure in the pressure circuit 16, the second accumulator device, which acts as a control valve 28, would cause the pressure downstream of the hydraulic master cylinder to drop suddenly to lower the actuation pedal 8.

As mentioned above, the brake system 4 is preferably of the brake-by-wire type.

Furthermore, the braking system 4 comprises at least one electro-hydraulic or electro-mechanical actuator connected to at least one braking device (not shown), which controls the actuation of the braking device as a function of the actuation pedal stroke.

According to a possible embodiment, the braking system 4 comprises a safety valve (not shown) which, in the event of an electrical fault of said electro-hydraulic or electro-mechanical actuator, fluidically connects the delivery circuit with at least one braking device. In this manner, in the event of an electrical fault, it is guaranteed that the user can brake by directly actuating at least one braking device by means of the hydraulic fluid pressurized by the hydraulic master cylinder.

The operation of a braking system according to the present invention will now be described.

The actuation method of a braking system in case of impact comprises the steps of:
- providing a braking system 4 for vehicles with collapsible actuation pedal 8, comprising an actuation pedal operatively connected to a hydraulic master cylinder 12 having a delivery circuit 16 fluidically connected to an accumulator device 20,
- depressurizing the delivery circuit 16 in the event of detection of an impact of the vehicle on which said braking system is installed and/or in the event of exceeding a pressure and/or flow rate limit value in said delivery circuit 16.

In detail, the operating principle is based on the fact that in case of the accidental impact of the user's foot or leg against the activation pedal 8, the pedal will offer an increasing resistance because it will increase the delivery pressure in the delivery circuit 16 to which the activation pedal 8 is connected by means of the hydraulic master cylinder 12. When the resistance offered by the drive pedal 8 exceeds a given threshold, the pedal constitutes a hazardous obstacle for the foot/leg of the user, who may suffer from serious trauma.

On the other hand, the brake system 4 according to the invention provides for depressurizing the delivery circuit 16 to obtain the sudden lowering of the actuation pedal 8 upon impact against the user's foot and/or leg.

Thus, the brake pedal lever is depressurized in the event of an accident to reduce its potential hazard to the driver.

In this manner, in the event of an accidental impact of the leg against the brake pedal in the rest position, the pedal will offer practically no resistance because the pressure in the system downstream of the pedal is significantly reduced: therefore, the pedal will sink under the thrust of the leg without causing injury or fractures.

The depressurization may be active or passive.

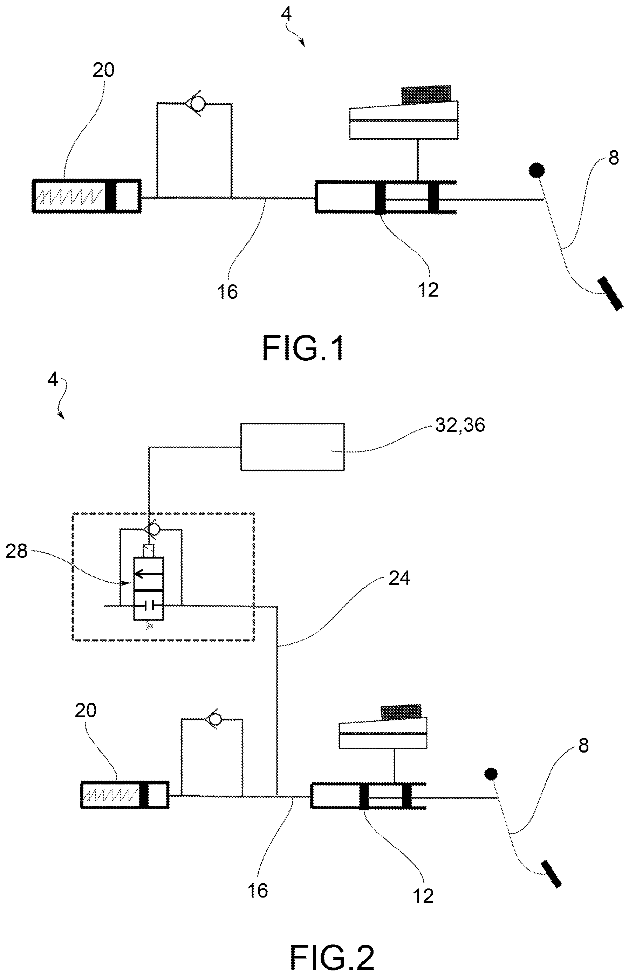

In the first case (figures 2-3 relative to embodiments not being part of the present invention), the detector 36, which actively detects potential danger due to an impact such as to require airbag deployment, can be exploited. Such an activation takes place at the same time as that of the control valve 28 which discharges the delivery pressure downstream of the hydraulic master cylinder 12. Further, as seen, the activation may comprise using a control actuator 28 which acts on the control valve 28, opening it at least partially.

For a sudden activation, it is also possible to provide for the use of an explosive charge of the detector 36 in order to open, at least partially, said control valve 28.

The depressurization can also be passive.

In such a case (figure 4 according to the invention), the control valve 28 opens automatically as soon as a given threshold pressure is reached in the flow circuit 16, following the lowering of the actuation pedal 8.

As can be appreciated from the description above, the present invention makes it possible to overcome the drawbacks presented in the prior art.

Indeed, the suggested solution provides the depressurization of the brake pedal lever as soon as it is recognized that the vehicle is involved in a traffic accident. In this manner, the brake lever will not oppose resistance to pressure and, in the event of an accidental impact by the driver, will be free to move from its rest position. The implementation of the present invention will thus drastically reduce the risk of injury from accidental impact with the brake pedal lever by the driver.

A person skilled in the art can make numerous changes and variants to the solutions described above, all contained within the scope of protection of the invention defined by the following claims to satisfy contingent, specific needs.

## Claims

1. Braking system (4) for vehicles with collapsible actuation pedal, comprising
- an operating pedal (8) operatively connected to a hydraulic pump (12) having a delivery circuit (16) fluidically connected to an accumulator device (20), wherein
- the delivery circuit (16) comprises a hydraulic branch (24) equipped with at least one normally closed control valve (28),
- said control valve (28) being connected to a control actuator (32) which commands its opening when an impact or accident is detected by a special detector (36) or being calibrated to open automatically when a limit pressure and/or flow rate value is reached in the hydraulic branch (24) following the lowering of the actuation pedal (8),
**characterized in that**
the hydraulic branch (24) is arranged in series and downstream of the accumulator device (20).

2. Braking system (4) for vehicles with collapsible actuation pedal according to claim 1, wherein said detector (36) is a controller, e.g. an airbag controller, which supervises the operation of at least one airbag, and wherein the control actuator (32) is operatively connected to said controller (36), so as to actuate the control valve (28) to open when the airbag controller (36) commands the activation of said airbag.

3. Braking system (4) for vehicles with collapsible actuation pedal according to claim 2, wherein the controller (36) is equipped with an explosive charge (40) which acts as control actuator (32) of the control valve (28), so that the explosive charge (40) can directly activate the opening of the control valve (28).

4. Braking system (4) for vehicles with collapsible actuation pedal according to claim 1, wherein the control valve (28) is a pressure relief valve and wherein the control actuator (32) comprises a second accumulator device (44), arranged in series and downstream of said accumulator device (20).

5. Braking system (4) for vehicles with collapsible actuation pedal according to any of the preceding claims, wherein the braking system (4) comprises at least one electro-hydraulic or electro-mechanical actuator connected to at least one braking device, which controls the actuation of the braking device according to the actuation pedal stroke (8).

6. Braking system (4) for vehicles with collapsible actuation pedal according to claim 5, wherein the braking system (4) comprises a safety valve which, in the event of an electrical fault of said electro-hydraulic or electro-mechanical actuator, fluidically connects the delivery circuit (16) with at least one braking device.

7. Actuation method of a braking system (4) in case of impact comprising the steps of:
- providing a braking system (4) for vehicles with collapsible actuation pedal, comprising an actuation pedal (8) operatively connected to a hydraulic pump (12) having a delivery circuit (16) fluidically connected to an accumulator device (20),
- depressurising the delivery circuit (16) in the event of detection of an impact of the vehicle on which said braking system is installed (4) and/or in the event of exceeding a pressure and/or flow rate limit value in said delivery circuit (16),
- providing, in the delivery circuit (16), a hydraulic branch (24) equipped with at least one normally closed control valve (28),
- said control valve (28) being connected to a control actuator (32) which commands its opening when an impact or accident is detected by a special detector (36) or being calibrated to open automatically when a limit pressure and/or flow rate value is reached in the hydraulic branch (24) following the lowering of the actuation pedal (8),
**characterized in that** the hydraulic branch (24) is arranged in series and downstream of the accumulator device (20).

8. Actuation method of a braking system according to claim 7, comprising the step of providing a braking system (4) according to any of the claims from 1 to 6.

## Patentansprüche

1. Bremssystem (4) für Fahrzeuge mit zusammenklappbarem Betätigungspedal, umfassend
- ein Betätigungspedal (8), das operativ mit einer Hydraulikpumpe (12) verbunden ist, die eine Versorgungschaltung (16) aufweist, die fluidisch mit einer Speichervorrichtung (20) verbunden ist,
wobei
- die Versorgungschaltung (16) einen hydraulischen Abzweig (24) umfasst, der mit mindestens einem normal geschlossenen Steuerventil (28) ausgestattet ist,
- wobei das Steuerventil (28) mit einem Steueraktuator (32) verbunden ist, der dessen Öffnung befiehlt, wenn ein Aufprall oder Unfall von einem speziellen Detektor (36) erkannt wird oder das kalibriert wird, um sich automatisch zu öffnen, wenn ein Druck und/oder einen Durchflussmenge-Grenzwert in dem hydraulischen Abzweig (24) nach dem Absenken des Betätigungspedal (8) erreicht wird,
**dadurch gekennzeichnet, dass**
der hydraulische Abzweig (24) in Reihe stromabwärts der Speichervorrichtung (20) angeordnet ist.

2. Bremssystem (4) für Fahrzeuge mit zusammenklappbarem Betätigungspedal nach Anspruch 1, wobei der Detektor (36) ein Steuergerät ist, z. B. ein Airbag-Steuergerät, das den Betrieb von mindestens einem Airbag überwacht, und wobei der Steueraktuator (32) operativ mit dem Steuergerät (36) verbunden ist, sodass er das Steuerventil (28) betätigt, um es zu öffnen, wenn das Airbag-Steuergerät (36) die Aktivierung des Airbags befiehlt.

3. Bremssystem (4) für Fahrzeuge mit zusammenklappbarem Betätigungspedal nach Anspruch 2, wobei das Steuergerät (36) mit einer Sprengladung (40) ausgestattet ist, die als Steueraktuator (32) des Steuerventils (28) wirkt, sodass die Sprengladung (40) das Öffnen des Steuerventils (28) direkt auslösen kann.

4. Bremssystem (4) für Fahrzeuge mit zusammenklappbarem Betätigungspedal nach Anspruch 1, wobei das Steuerventil (28) ein Druckentlastungsventil ist und wobei der Steueraktuator (32) eine zweite Speichervorrichtung (44) umfasst, die in Reihe und stromabwärts der Speichervorrichtung (20) angeordnet ist.

5. Bremssystem (4) für Fahrzeuge mit zusammenklappbarem Betätigungspedal nach einem der vorhergehenden Ansprüche, wobei das Bremssystem (4) mindestens einen elektrohydraulischen oder elektromechanischen Aktuator umfasst, der mit mindestens einer Bremsvorrichtung verbunden ist, die die Betätigung der Bremsvorrichtung nach dem Hub des Betätigungspedals (8) steuert.

6. Bremssystem (4) für Fahrzeuge mit zusammenklappbarem Betätigungspedal nach Anspruch 5, wobei das Bremssystem (4) ein Sicherheitsventil umfasst, das bei einem elektrischen Fehler des elektrohydraulischen oder elektromechanischen Aktuators die Versorgungsschaltung (16) fluidisch mit mindestens einer Bremsvorrichtung verbindet.

7. Verfahren zur Betätigung eines Bremssystems (4) bei einem Aufprall, umfassend die folgenden Schritte:
- Bereitstellen eines Bremssystems (4) für Fahrzeuge mit zusammenklappbarem Betätigungspedal, umfassend ein Betätigungspedal (8), das operativ mit einer Hydraulikpumpe (12) verbunden ist, die eine Versorgungsschaltung (16) aufweist, die fluidisch mit einer Speichervorrichtung (20) verbunden ist,
- Verringern den Druck in der Versorgungsschaltung (16) beim Erkennen eines Aufpralls des Fahrzeugs, auf dem das Bremssystem (4) installiert ist und/oder bei Überschreiten eines Druck- und/oder Durchflussmenge-Grenzwerts in der Versorgungsschaltung (16),
- Bereitstellen eines hydraulischen Abzweigs (24) in der Versorgungsschaltung (16), die mit mindestens einem normal geschlossenen Steuerventil (28) ausgestattet ist,
- wobei das Steuerventil (28) mit einem Steueraktuator (32) verbunden ist, der dessen Öffnung befiehlt, wenn ein Aufprall oder Unfall von einem speziellen Detektor (36) erkannt wird oder das kalibriert wird, um sich automatisch zu öffnen, wenn ein Druck und/oder Durchflussmenge-Grenzwert in dem hydraulischen Abzweig (24) nach dem Absenken des Betätigungspedals erreicht wird.

8. Verfahren zur Betätigung eines Bremssystems nach Anspruch 7, umfassend den Schritt des Bereitstellens eines Bremssystems (4) nach einem der Ansprüche 1 bis 6.

## Revendications

1. Système de freinage (4) pour véhicules à pédale d'actionnement repliable, comprenant
- une pédale d'actionnement (8) connectée opérationnellement à une pompe hydraulique (12) disposant d'un circuit de refoulement (16) connecté fluidiquement à un dispositif d'accumulation (20), dans lequel
- le circuit de refoulement (16) comprend une dérivation hydraulique (24) équipée d'au moins une vanne de commande normalement fermée (28),
- ladite vanne de commande (28) étant connectée à un actionneur de commande (32) qui commande son ouverture lorsqu'un choc ou un accident est détecté par un détecteur spécial (36) ou étant calibrée pour s'ouvrir automatiquement lorsqu'une valeur limite de pression et/ou de débit est atteinte dans la dérivation hydraulique (24) à la suite de l'abaissement du pédale d'actionnement (8),
**caractérisé en ce que**
la dérivation hydraulique (24) est disposée en série et en aval du dispositif d'accumulation (20).

2. Système de freinage (4) pour véhicules à pédale d'actionnement repliable selon la revendication 1, dans lequel ledit détecteur (36) est un contrôleur, par exemple un contrôleur d'airbag, qui supervise le fonctionnement d'au moins un airbag, et dans lequel l'actionneur de commande (32) est connecté opérationnellement audit contrôleur (36), de manière à commander l'ouverture de la vanne de commande (28) lorsque le contrôleur d'airbag (36) commande l'activation dudit airbag.

3. Système de freinage (4) pour véhicules à pédale d'actionnement repliable selon la revendication 2, dans lequel le contrôleur (36) est équipé d'une charge explosive (40) qui agit comme actionneur de commande (32) de la vanne de commande (28), de sorte que la charge explosive (40) peut activer directement l'ouverture de la vanne de commande (28).

4. Système de freinage (4) pour véhicules à pédale d'actionnement repliable selon la revendication 1, dans lequel la vanne de commande (28) est une soupape de décharge de pression et dans lequel l'actionneur de commande (32) comprend un second dispositif d'accumulation (44), disposé en série et en aval dudit dispositif d'accumulation (20).

5. Système de freinage (4) pour véhicules à pédale d'actionnement repliable selon l'une quelconque des revendications précédentes, dans lequel le système de freinage (4) comprend au moins un actionneur électro-hydraulique ou électro-mécanique connecté à au moins un dispositif de freinage, qui commande l'actionnement du dispositif de freinage en fonction de la course de la pédale d'actionnement (8).

6. Système de freinage (4) pour véhicules à pédale d'actionnement repliable selon la revendication 5, dans lequel le système de freinage (4) comprend une vanne de sécurité qui, en cas de défaillance électrique dudit actionneur électro-hydraulique ou électro-mécanique, connecte fluidiquement le circuit de refoulement (16) à au moins un dispositif de freinage.

7. Procédé d'actionnement d'un système de freinage (4) en cas de choc comprenant les étapes suivantes :
- prévoir un système de freinage (4) pour véhicules à pédale d'actionnement repliable, comprenant une pédale d'actionnement (8) connectée opérationnellement à une pompe hydraulique (12) ayant un circuit de refoulement (16) connecté fluidiquement à un dispositif d'accumulation (20),
- dépressuriser le circuit de refoulement (16) en cas de détection d'un choc du véhicule sur lequel est installé ledit système de freinage (4) et/ou en cas de dépassement d'une valeur limite de pression et/ou de débit dans ledit circuit de refoulement (16),
- prévoir, dans le circuit de refoulement (16), une dérivation hydraulique (24) équipée d'au moins une vanne de commande normalement fermée (28),
- ladite vanne de commande (28) étant connectée à un actionneur de commande (32) qui commande son ouverture lorsqu'un choc ou un accident est détecté par un détecteur spécial (36) ou étant calibrée pour s'ouvrir automatiquement lorsqu'une valeur limite de pression et/ou de débit est atteinte dans la dérivation hydraulique (24) à la suite de l'abaissement de la pédale d'actionnement (8),
**caractérisé en ce que** la dérivation hydraulique (24) est disposée en série et en aval du dispositif d'accumulation (20).

8. Procédé d'actionnement d'un système de freinage selon la revendication 7, comprenant l'étape consistant à prévoir un système de freinage (4) selon l'une quelconque des revendications 1 à 6.
